# EUROPEAN PATENT APPLICATION

(11) **EP 4 677 991 A1**
(43) Date of publication of application: **14.01.2026**
(21) Application number: 25180857.2
(22) Date of filing: 04.06.2025
(51) Int. Cl.: A01D 43/08, A01F 29/12

(54) **A FORAGE HARVESTER**

(30) Priority: 08.07.2024 GB 202409893
(71) Applicant: AGCO International GmbH, 8212 Neuhausen am Rheinfall (CH)
(72) Inventor: Lindenberger, Anika, 87616 Marktoberdorf (DE)
(74) Representative: AGCO Intellectual Property Department

(57) **Abstract**

This disclosure provides a delivery spout for a forage harvester in which a guide plate is provided in the vicinity of an entrance end of the delivery spout, and opposite to a region of the delivery spout at which material is received from a processing system of the forage harvester. The guide plate is movable to adjust an effective flow cross sectional area in the vicinity of the entrance end, thereby to adjust a flow speed from the delivery end.

## Description

### FIELD

Embodiments of the present disclosure relate generally to the forage harvesters, and in particular to the delivery of foraged crop material from a forage harvester to a collection vehicle.

### BACKGROUND

A forage harvester is designed to harvest and process forage crops such as corn, grass, and other similar crops for silage.

A forage harvester typically includes a header at the front of the forage harvester that gathers the crop from the field. Headers come in various types depending on the crop being harvested, such as corn headers, pickup headers for grass and small grains, or wide swath headers.

The header is used to cut the crop as it is fed into the machine. It can have various configurations, such as rotary blades or flail-type knives, depending on the type of crop.

A crop processor is typically used for further processing the harvested crop, for example with mechanisms for crushing, cracking, or shredding the crop to enhance its digestibility and nutritional value for livestock feed.

A crop conveyance system is used to transport the harvested crop through the cutting and processing components of the harvester.-An accelerator is used to assist in feeding the crop through the machine. It helps in breaking down the crop material and ensuring a consistent flow of material through the harvester.

The forage harvester typically has a collection and delivery system for overloading the processed forage into a further vehicle, which may be e.g. a loading wagon driven by a tractor.

This disclosure relates in particular to the design of the collection and delivery system for overloading into a separate vehicle. The collection and delivery system comprises a delivery spout for receiving the harvested crop coming from the crop conveyance system (from the accelerator) and delivering the crop to the loading wagon.

With the increasing performance in terms of harvested crop per hour/acre, it is very important to overload the crop quickly and efficiently. On the other hand, it is also very important to provide an overloading system that enables the driver (or an assisting system) to precisely overload the crop, e.g. to ensure balanced filing of the loading wagon and/or avoid crop losses during overloading. This requires fine control of the overloading process, amongst others the throwing distance.

DE 10 2016 215 045 discloses an adjustable plate within a transition housing between the accelerator and the spout. The adjustable plate is hinged at its lower end. The adjustment plate is used to change the internal cross section of the transition housing for different crop types and characteristics, and in particular is used to prevent non-continuous crop conveyance and reduce turbulence.

There remains a problem in controlling the delivery of material from a delivery system.

### BRIEF SUMMARY

The scope of this disclosure is defined by the claims.

According to examples in accordance with this disclosure, there is provided a delivery spout for a forage harvester, comprising: an entrance end for receiving crop material from a processing system of the forage harvester, a delivery end for delivering crop material to a collection vessel, and a channel between the entrance and the delivery end, wherein the entrance end comprises a receiving zone against which crop material is directed by the processing system of the forage harvester; and a guide plate in the vicinity of the entrance end, opposing the receiving zone, wherein the guide plate is movable to adjust an effective flow cross sectional area in the vicinity of the entrance end, thereby to adjust a flow speed from the delivery end.

The guide plate performs flow path adjustment within the delivery spout. By reducing the flow cross section, the flow velocity is increased, so that the entrained crop material is increased in speed. This enables the flow velocity from the delivery end of the spout to be controlled, and hence the throwing distance. In particular, the increased gas flow velocity entrains an increased solid material flow speed, which then translates to the increased exit speed from the delivery spout. This is a power efficient alternative to increasing the power to the accelerator to achieve an increased throwing distance. It means limited additional power is needed by the processing system (e.g. accelerator) of the forage harvester in order to enable additional throwing distance from the delivery end.

The guide plate alone can be used to adjust the flow speed, or other measures may also be employed, such as accelerator power adjustment and/or accelerator rear wall gap adjustment.

Crop can be overloaded quickly and efficiently, with balanced filing of a collection vessel (i.e. a uniform distribution over area). This may also help to avoid or minimize crop losses during overloading by providing greater control of the overloading process.

By providing the guide plate in the delivery spout, it can be a small size, and can be moved into its operating position with low energy requirement.

The acceleration of the material at the guide plate means that the rear wall gap of the accelerator can be set larger and thus the accelerator has to absorb less power. The reduced power needed for throwing adjustment for example means more power is available for a cracker unit to provide improved crop processing.

The position of the guide plate, opposing the receiving zone, also at least partly reduces or completely removes any wear of the guide plate due to material contact with the guide plate. The arrangement provides a simpler system than a rear wall adjustment system at the accelerator.

The crop material is for example, in use, directed upwardly by the processing system of the forage harvester, the receiving zone comprises an upper region of the entrance end, and the guide plate is mounted at a lower region of the entrance end.

The delivery spout may comprise a replaceable wear plate at the receiving zone.

The delivery spout may comprise an adjuster for adjusting the position of the guide plate. This enables the throwing distance to be controlled dynamically.

The guide plate for example comprises an elongate flow guide which extends along a portion of the channel. The guide plate is for example connected at a proximal end to the entrance end by a hinge connection, and a height adjuster is connected to the guide plate downstream of the hinge connection.

This disclosure also provides a forage harvester comprising: a processing system for cutting and processing the cut crop material; and the delivery spout as defined above for receiving the processed crop material.

The processing system for example comprises: a chopper drum; and an accelerator, wherein the accelerator delivers the crop material to the delivery spout.

A turntable may be provided between the accelerator and the delivery spout.

The forage harvester for example comprising a sensor arrangement for sensing conditions relating to the delivery of crop material from the delivery end and a controller for automatically controlling the movement of the guide plate. In this way, the throwing of material from the delivery spout may be controlled automatically based on sensed conditions.

The sensor arrangement for example comprises one or more from the list: a crop flow speed sensor; a delivery spout position sensor; a delivery spout orientation sensor. These sensors may enable the throwing characteristics to be assessed.

In one arrangement, the sensor arrangement may be further configured to detect a target delivery position of the crop flow. This may involve tracking a trailer position.

In another arrangement, the controller may be configured to receive user input specifying one or more from the list: a trailer position or distance; a desired throwing distance;

a desired crop flow behavior. The desired crop flow behavior for example may include a flow profile or spread.

Thus, the target position may be sensed or instructions may be input manually to the controller which depend on the target position. Thus, semi-automated or fully automated control approaches are possible.

### BRIEF DESCRIPTION OF THE DRAWINGS

One or more embodiments of this disclosure will now be described, by way of example only, with reference to the accompanying drawings, in which:
FIG. 1 shows a forage harvester;
FIG. 2 shows the guide plate and its adjuster in more detail; and
FIG. 3 shows a cross section through the delivery duct through the guide plate.

### DETAILED DESCRIPTION

The subject matter of this disclosure will be described with reference to the Figures.

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure provides a delivery spout for a forage harvester in which a guide plate is provided in the vicinity of an entrance end of the delivery spout, and opposite to a region of the delivery spout at which material is received from a processing system of the forage harvester. The guide plate is movable to adjust an effective flow cross sectional area in the vicinity of the entrance end, thereby to adjust a flow speed from the delivery end.

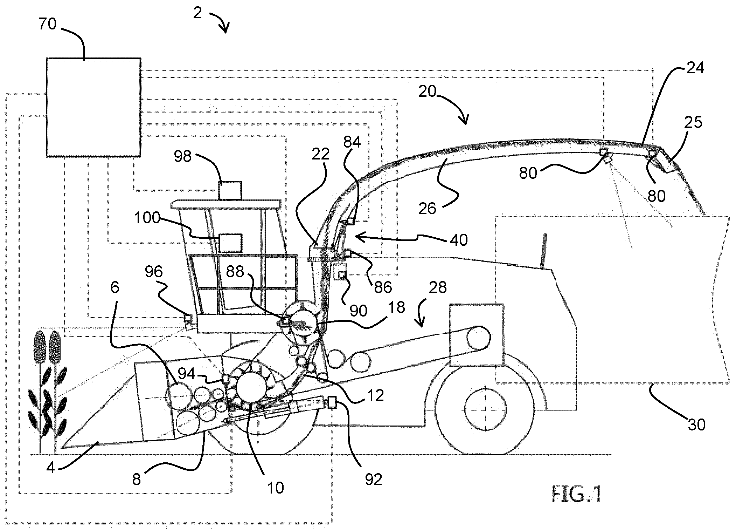

With reference to FIG. 1, in a schematic side view the main components of a forage harvester 2 are shown. The forage harvester 2 is provided with a front attachment 4 which in the illustrated example contains cutting equipment for cutting a crop. The cut crop is then fed through a series of compression rollers 6 in a compression roller housing 8 to a chopper drum assembly 10 where the crop is chopped into smaller pieces between a shear bar and a plurality of chopper knives mounted on a chopper drum.

The chopped crop next passes through a duct 12 leading to an accelerator 18.

There may also be a cracker unit (not shown) between the chopper drum assembly 10 and the accelerator 18 where the crop is further crushed.

The harvested crop is then blown upwards from the outlet of the accelerator and exits through a delivery spout 20.

The cutting, compression, chopping and accelerating (and optional cracking) may together be considered to comprise functions of a processing system of the forage harvester.

The delivery spout 20 has an entrance end 22 for receiving crop material from the processing system and a delivery end 24 for delivering crop material to a collection vessel 30. A channel 26 extends between the entrance end 22 and the delivery end 24.

The rotating members of the processing system are driven by a belt system 28.

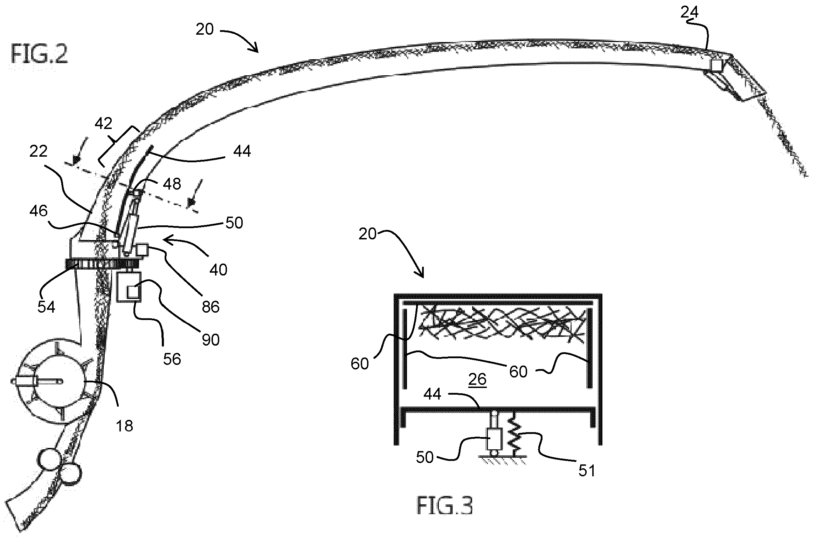

This disclosure relates to an adjustable guide plate system in the delivery duct, in particular located at, or near, the entrance end of the delivery spout 20. The adjustable guide plate system is indicated generally as reference 40 in FIG. 1, and it is shown in more detail in FIG. 2.

As shown in FIG. 2, the entrance end 22 of the delivery duct 20 comprises a receiving zone 42 against which crop material is directed by the processing system of the forage harvester. In the example shown, the material is delivered upwardly by the accelerator 18 and the receiving zone thus faces at least partly downwardly.

The adjustable guide plate system 40 comprises a guide plate 44 which opposes the receiving zone. In this example, the guide plate faces at least partly upwardly and is diametrically opposite the receiving zone. Thus, the material flow impacts on the receiving zone but does not directly strike the guide plate. The material flow is generally along the guide plate.

The guide plate is elongated and extends along the length direction of the delivery duct. It functions as a flow guide along a portion of the channel 26, in particular at or near the receiving zone 42. It extends a short distance along the delivery duct, for example 20 cm to 100 cm.

The cross sectional area of the delivery duct, at the end of the guide plate, is for example in the range 300 cm² to 1200 cm², for example 500 cm² to 750 cm². For example, it may have a rectangular cross section with a width in the range 20 cm to 40 cm and a height in the range 15 cm to 30 cm.

The guide plate is movable to adjust an effective flow cross sectional area in the vicinity of the entrance end, thereby to adjust a flow speed from the delivery end. The cross section is perpendicular to the local length direction of the delivery spout, for example the cross section as indicated in FIG. 2.

The guide plate alone can be used to adjust the flow speed from the delivery end. However, other adjustments may also be made to control the flow speed, such accelerator power adjustment and/or accelerator rear wall gap adjustment.

The guide plate in the example shown is pivoted at one longitudinal end (wherein the length direction of the guide plate is the length direction of the delivery spout). The hinge connection 46 for the pivoting movement is at the entrance end. Between the hinge connection 46 and the opposite end of the guide plate there is a connection 48 to an adjuster 50 such as a hydraulic piston, pneumatic piston, or electric arrangement.

The adjuster 50 is used to pivot the guide plate 44 about the hinge connection 46 thereby to narrow or widen the path along which the material flows.

A turntable 54 is provided between the accelerator 18 and the delivery spout 20. This enables rotation of the delivery spout with respect to the rest of the harvester 2 about a substantially vertical axis. For example, if the delivery spout is directed generally rearwardly as shown in FIG. 1, it can be rotated to provide movement of the delivery end 24 in the width direction of the forage harvester, so that the flow can be directed to different parts of the collection vessel.

By reducing the flow cross section, the (gas) flow velocity is increased, so that the entrained crop material is increased in speed. This enables the flow velocity from the delivery end 24 of the spout to be controlled, and hence the throwing distance. The increased speed of the solid material translates to an increased exit speed from the delivery spout. This increased speed can be achieved with little or no increase in power delivered to the accelerator.

The control of the throwing distance enables crop to be overloaded quickly and efficiently, with balanced filing of the collection vessel 30, and it also minimize crop losses during overloading by providing greater control of the overloading process.

By providing the guide plate in the delivery spout, it can be a small size, and can be moved into its operating position with low energy requirement.

The acceleration of the material in the vicinity of the guide plate means that the rear wall gap of the throwing accelerator 18 can be set larger and thus the accelerator 18 has to absorb less power. The rear wall gap is the distance between the accelerator paddles and the rear wall of the accelerator housing. The material distribution in the accelerator is directly affected by this rear wall gap. A small gap results in more material directly on the accelerator plates. A larger gap means there is less material incident on the accelerator plates and therefore a lower torque implication for those plates in generating the air flow, but in turn leading to a lower power consumption. The reduced power needed for throwing adjustment for example means more power is available for a cracker unit to provide improved crop processing.

The position of the guide plate opposing the receiving zone 42 at least partly reduces any wear of the guide plate due to contacting the crop material. The arrangement provides a simpler system than a rear wall adjustment system at the accelerator.

The receiving zone 42 is most susceptible to wear, so for this reason a replaceable wear plate may be provided at the receiving zone.

FIG. 3 shows the cross section indicated in FIG. 2. It shows replaceable wear plates 60 lining the receiving zone of the channel 26, as well as the guide plate 44.

It also shows that a damping element 51 may be provided to damp the movement of the guide plate 44, although the required damping may instead be achieved by the design of the actuator cylinder itself.

The guide plate may be adjusted into a desired position by manually selecting a position for the guide plate and setting the adjuster 50 to a corresponding position. However, the adjustment is preferably semi-automatic or fully automatic.

For this purpose, the forage harvester may comprise a sensor arrangement for sensing conditions relating to the delivery of crop material from the delivery end and a controller for automatically controlling the movement of the guide plate.

Returning to FIG. 1, a controller is shown as 70. A sensor arrangement provides feedback information to the controller 70.

By way of example, various possible sensors are shown in FIG. 1, including:
a tilt sensor 80 for sensing (and actuating) a tilt angle of a flow director 25 at the end of the delivery spout; a camera 82 for viewing the collection vessel 30 such that the position of the vessel relative to the delivery spout can be determined, as well as the filling contour of the collection vessel; a sensor 84 for sensing the guide plate adjustment position; a sensor 86 for reporting the actuation setting of the adjuster; a flow sensor 88 for sensing the flow through the accelerator; a sensor 90 for reporting the turntable position; a sensor 92 for reporting a header position; a sensor 94 associated with the chopper drum assembly 10, which may be used to sense a material flow rate or throughput from the rollers associated with the chopper drum, or for sensing a position of one or more components of the harvester, such as a position or orientation of one or more rollers; a camera 96 for imaging the crop before cutting; and a GPS unit 98 for tracking the harvester position (and orientation).

These sensors may be used in any desired combination. A first type of sensor is for providing feedback about the flow that is being delivered, and a second type of sensor is for providing feedback about the most suitable location to which the flow should be directed.

FIG. 1 also shows a display terminal 100 for displaying information to the operator, including information (or images) derived from the various sensors.

Different levels of control are possible. For example, the crop flow speed (sensor 88) and the delivery spout position (sensor 90) and orientation (e.g. if there is a director 25 - sensor 80) together enable the throwing characteristics from the end of the delivery spout to be assessed. In this way, a user can use this knowledge to make adjustments.

The user may input information about the desired location. For example, the user may input a trailer position or distance or a desired throwing distance, and the sensing enables the guide plate (and optionally also the director 25) to be adjusted to meet the required throwing distance.

Other sensors enable a target delivery position of the crop flow to be determined automatically. For example, the camera sensor 80 enables the collection vessel location to be automatically identified, and in combination with other sensing as described above, a more fully automated control of the guide plate is then possible.

The adjuster used to adjust the position of the guide plate may be hydraulic, pneumatic, or electric.

The guide plate may have any suitable shape. It preferably has a smooth profile so that it does not present an abrupt surface to the incident flow, and hence is less prone to wear.

The guide plate may be adjustable between a maximum channel area and a minimum channel area, wherein the minimum channel area is between 30% and 70% of the maximum channel area.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the subject matter of this disclosure, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A delivery spout (20) for a forage harvester, comprising:
an entrance end (22) for receiving crop material from a processing system (8, 10,18) of the forage harvester, a delivery end (24) for delivering crop material to a collection vessel (30), and a channel (26) between the entrance and the delivery end, wherein the entrance end (22) comprises a receiving zone (42) against which crop material is directed by the processing system (8, 10, 18) of the forage harvester; and
a guide plate (44) in the vicinity of the entrance end, opposing the receiving zone (42),
wherein the guide plate (42) is movable to adjust an effective flow cross sectional area in the vicinity of the entrance end (22), thereby to adjust a flow speed from the delivery end.

2. The delivery spout of claim 1, wherein the crop material is, in use, directed upwardly by the processing system (8, 10,18) of the forage harvester, the receiving zone (42) comprises an upper region of the entrance end, and the guide plate (44) is mounted at a lower region of the entrance end.

3. The delivery spout of claim 1 or 2, comprising a replaceable wear plate (60) at the receiving zone.

4. The delivery spout of any one of claims 1 to 3, comprising an adjuster (50) for adjusting the position of the guide plate.

5. The delivery spout of any one of claims 1 to 4, wherein the guide plate comprises an elongate flow guide (44) which extends along a portion of the channel (26).

6. The delivery spout of claim 5, wherein the guide plate (44) is connected at a proximal end to the entrance end by a hinge connection (46), and a height adjuster (50) is connected to the guide plate downstream of the hinge connection (46).

7. A forage harvester comprising:
a processing system (8, 10, 18), for cutting and processing the crop material; and
the delivery spout (20) of any one of claims 1 to 6 for receiving the processed crop material.

8. The forage harvester of claim 7, wherein the processing system comprises:
a chopper drum (10); and
an accelerator (18), wherein the accelerator delivers the crop material to the delivery spout (20).

9. The forage harvester of claim 8, further comprising a turntable (54) between the accelerator (18) and the delivery spout (20).

10. The forage harvester of any one of claims 7, 8 or 9, comprising a sensor arrangement (80, 82, 84, 86, 88, 90, 92, 94, 96) for sensing conditions relating to the delivery of crop material from the delivery end and a controller for automatically controlling the movement of the guide plate (44).

11. The forage harvester of claim 10, wherein the sensor arrangement comprises one or more from the list:
a crop flow speed sensor (88);
a delivery spout position sensor (90);
a delivery spout orientation sensor (80).

12. The forage harvester of claim 10 or 11, wherein the sensor arrangement is further configured to detect a target delivery position of the crop flow.

13. The forage harvester of any one of claims 10 to 12, wherein the controller is configured to receive user input specifying one or more from the list:
a trailer position or distance;
a desired throwing distance;
a desired crop flow behavior.
